# FASCICULE DE BREVET EUROPEEN

(11) **EP 0 719 969 B1**
(45) Date de publication et mention de la délivrance du brevet: **26.08.1998**
(21) Numéro de dépôt: 95420368.3
(22) Date de dépôt: 26.12.1995
(51) Int. Cl.: F16K 17/04

(54) **Soupape de sécurité**
Sicherheitsventil
Safety valve

(30) Priorité: 27.12.1994 FR 9415709
(43) Date de publication de la demande: 03.07.1996
(73) Titulaire: COMAP, F-69008 Lyon (FR)
(72) Inventeur: Perichon, Christian, F-69540 Irigny (FR)
(74) Mandataire: Maureau, Philippe

(56) Documents cités:
- DE-A- 1 258 224
- NL-C- 109 766

## Description

La présente invention a pour objet une soupape de sécurité, plus spécialement une soupape pour réseau de fluide sous pression, par exemple pour installation de chauffage ou installation de distribution d'air comprimé.

Les soupapes connues destinées au réseau de fluide sous pression sont généralement constituées d'un nombre important de pièces agencées de manière complexe, ce qui implique des coûts de fabrication élevés, multiplie les risques de panne et complique les interventions de dépannage.

De telles soupapes sont décrites dans les documents DE-A-12 58 224 et NL-C-109 766. Dans l'un et l'autre cas, la soupape comporte un corps définissant une chambre d'entrée de fluide et une chambre de sortie de fluide séparées par une cloison munie d'un passage pour le fluide entourée d'un siège annulaire, un clapet muni d'une portée étant susceptible d'occuper deux positions, une première position de fermeture dans laquelle cette portée est appliquée contre le siège et une seconde position d'ouverture dans laquelle cette portée est à distance du siège. La soupape du document NL-C-109 766 comprend un corps constitué, d'une part, par un porte-siège définissant les chambres d'entrée et de sortie, ainsi que la cloison munie du passage entouré du siège, ce porte-siège comportant une ouverture coaxiale au siège et, d'autre part, par une cage prolongeant le corps au-delà de l'ouverture coaxialement au siège, et un clapet traversant l'ouverture du corps, étant réalisé en un matériau déformable présentant, à l'une de ses extrémités la portée d'appui contre le siège, à son autre extrémité une surface d'appui contre la cage. Dans l'un et l'autre cas, le clapet est maintenu en position contre le siège par un système de fixation incluant notamment une vis ou un écrou. Ce genre de clapet ne fonctionne pas de façon satisfaisante dans une large plage de pressions, l'étanchéité vers l'extérieur n'est pas bien assuré, l'obturateur est mal guidé dans la cavité dans laquelle il est monté, et il n'est pas possible d'actionner la soupape manuellement, dans la mesure où le clapet est entièrement recouvert par les moyens de retenue.

Le but de l'invention est de fournir une soupape de conception très simple, dans laquelle le nombre de composants soit le plus réduit possible, qui puisse s'ouvrir sous l'effet de faibles surpressions, c'est-à-dire possède une bonne capacité de déformation, et qui assure une bonne étanchéité. Un autre but de l'invention est de fournir une soupape susceptible d'être actionnée manuellement vers sa position d'ouverture.

A cet effet, la soupape selon l'invention, du type précité, est caractérisée en ce que le clapet comporte, dans sa partie centrale, une lèvre annulaire faisant saillie vers l'extérieur, dont le pourtour est fixé au corps de la soupape.

Sous l'effet d'une augmentation de pression de fluide dans la chambre d'entrée, le clapet, retenu par la cage à son extrémité opposée à celle comportant la portée d'étanchéité, se déforme au niveau de la lèvre annulaire disposée dans sa partie centrale, permettant le soulèvement de la partie formant portée contre le siège et la mise en communication entre les chambres d'entrée et de sortie. Il doit être noté que la lèvre annulaire, d'une part, permet la déformation de l'obturateur et, d'autre part, assure l'étanchéité du volume contenant le fluide vis-à-vis de l'extérieur.

Le corps constitué par le porte-siège et par la cage, peut être réalisé en une pièce, ou en deux pièces distinctes. Avantageusement, lorsque le corps est réalisé en deux pièces distinctes l'ouverture du porte-siège est délimitée par un collet s'étendant du côté opposé au siège et servant au montage de la cage de clapet.

Cet agencement permet un excellent centrage de la cage par rapport au porte-siège, le collet pouvant également servir à la fixation de la cage, dans la mesure où les deux pièces concernées sont filetées extérieurement et intérieurement.

Suivant une autre caractéristique de l'invention, le clapet comporte, à son extrémité opposée à sa portée d'étanchéité, une portée tronconique, en appui contre une surface de même inclinaison que présente la cage.

Les deux surfaces tronconiques complémentaires respectivement du clapet et de la cage assurent un blocage axial du clapet et son maintien en appui contre le siège.

Afin d'améliorer les propriétés élastiques du clapet, un ressort métallique est noyé dans le clapet.

Suivant une autre caractéristique de l'invention, le clapet comporte un évidement intérieur débouchant dans sa face opposée à sa portée d'étanchéité.

Cet évidement favorise la capacité de déformation du clapet.

Avantageusement, cette soupape comporte un bouton de manoeuvre solidaire du clapet, possédant un doigt engagé dans l'évidement intérieur du clapet et dont la tête, en forme de harpon, est logée dans une chambre ménagée au centre du clapet.

Le montage du bouton de manoeuvre ne pose aucune difficulté, dans la mesure où la partie centrale de l'obturateur est totalement dégagée, l'obturateur étant tenu par la cage uniquement dans sa zone périphérique.

Une traction exercée sur le bouton de manoeuvre permet de dégager la portée d'étanchéité du clapet vis-à-vis du siège entourant l'ouverture de passage de fluide.

Suivant une autre caractéristique de l'invention, le corps et le bouton de manoeuvre comportent des surfaces en regard munies d'ondulations de formes conjuguées destinées à coopérer lors de la rotation du bouton pour assurer un mouvement axial du bouton relativement au corps.

De toute façon, l'invention sera bien comprise à l'aide de la description qui suit, en référence au dessin schématique annexé représentant, à titre d'exemple non limitatif, une forme d'exécution de cette soupape :

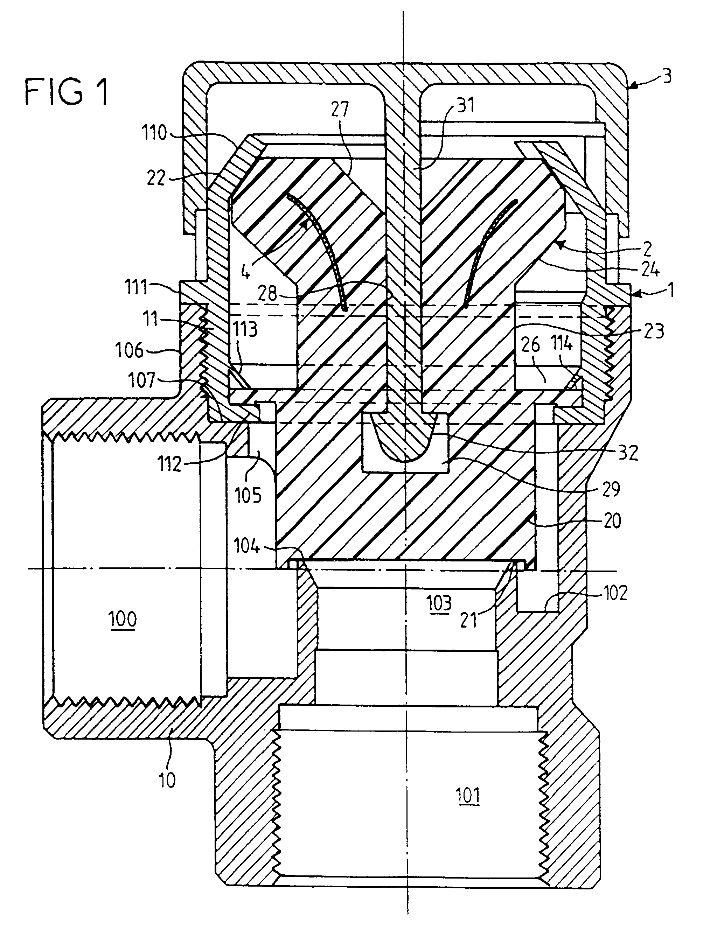

Figure 1 en est une vue en coupe longitudinale en position de fermeture ;

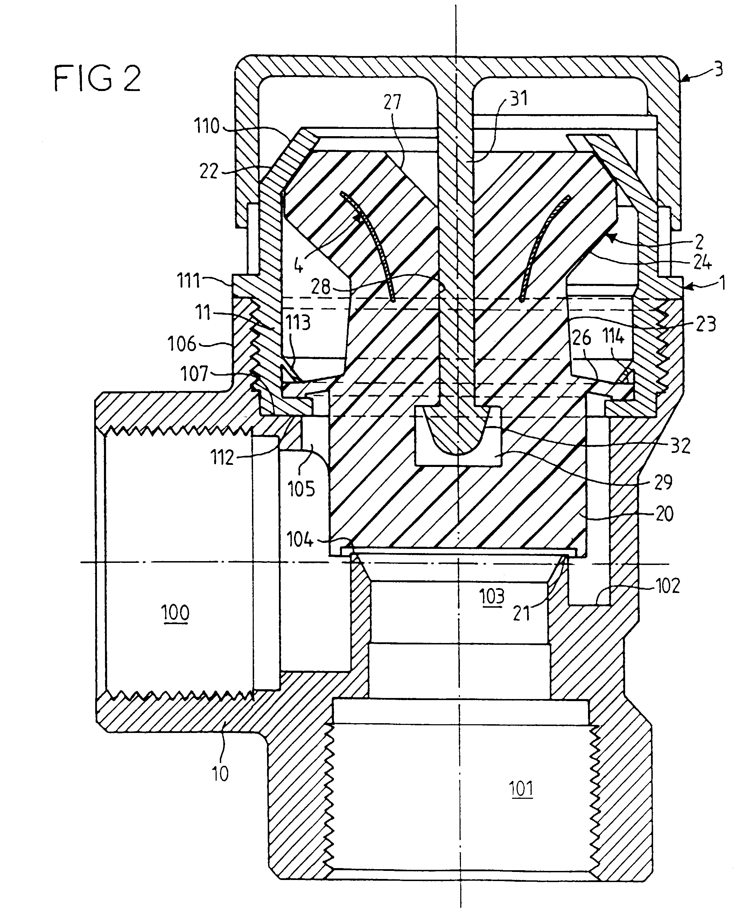

Figure 2 en est une vue en coupe longitudinale en position d'ouverture.

La soupape représentée au dessin comprend un corps 1, un clapet 2 et un bouton d'actionnement manuel 3.

Le corps 1 comporte un porte-siège 10 présentant une chambre d'entrée 101 et une chambre de sortie 100 orientées sensiblement perpendiculairement l'une à l'autre et destinées à être reliées respectivement à une conduite d'arrivée de fluide et à une conduite de départ de fluide. Les deux chambres 101 et 100 sont séparées par une cloison 102 présentant un passage 103 pour le clapet entouré par un siège annulaire 104. Coaxialement au siège 104, le porte-siège 10 présente une ouverture 105 destinée au montage du clapet 2. Cette ouverture est entourée coaxialement par un collet 106 s'étendant du côté opposé au siège.

L'intérieur du collet 106 présente un diamètre supérieur à celui de l'ouverture 105, le collet 106 étant relié à cette dernière par une couronne circulaire s'étendant dans un plan perpendiculaire à l'axe du siège 104 et de l'ouverture 105. Cette couronne circulaire 107 sert de butée à une cage de clapet 11 qui est introduite dans le collet 106. La fixation de la cage 11 vis-à-vis du porte-siège 10 est réalisée par coopération d'un filetage extérieur de la cage 11 coopérant avec un filetage intérieur du collet 106. La partie filetée de la cage est limitée par une collerette 111 prenant appui contre l'extrémité libre du collet 106. L'extrémité de la cage de clapet 11 tournée du côté du siège 104 présente un retour 112 vers l'intérieur destiné à prendre appui contre la couronne circulaire 107.

Le clapet 2 réalisé sous la forme d'un bloc déformable élastiquement, par exemple moulé en élastomère, a une forme allongée et s'étend dans le porte-siège 10 et dans la cage de clapet 11. Il présente, sur sa longueur, plusieurs régions de forme générale cylindrique à section droite circulaire. Le clapet présente une première région 20 du côté du siège 104, cette région comportant une surface d'extrémité 21 formant portée d'étanchéité plane destinée à venir en appui contre le siège 104 en position de fermeture de la soupape. La zone d'extrémité opposée du clapet 2 comporte une partie 22 de forme tronconique destinée à venir en appui contre une surface de même inclinaison que possède la cage de clapet 11. Cet appui assure le maintien du clapet en position contre son siège 104. Le clapet comporte enfin une partie centrale 23 de plus petit diamètre, ainsi qu'une partie 24 de raccordement de la partie 23 avec la région tronconique 22. La partie 24 est inclinée en sens inverse de la partie 22. Dans sa partie centrale 23, le clapet comporte une lèvre annulaire 26 en une seule pièce avec le clapet, dont la périphérie est de préférence renflée, et vient prendre appui contre le retour 112 de la cage. Le maintien en position est assuré par une lèvre 113 déformable élastiquement appartenant à la cage 2 et faisant saillie sur la face intérieure de celle-ci.

Afin d'augmenter la déformabilité du clapet 2, celui-ci comporte un évidement intérieur débouchant dans sa face opposée à la portée 21, constituée par un évidement tronconique 27 prolongé par un couloir cylindrique 28 et une chambre centrale élargie 29. Pour donner au clapet une bonne capacité de retour dans sa position d'origine après déformation, celui-ci comporte intérieurement des lames métalliques 4, qui peuvent être incluses dans le clapet lors du moulage de celui-ci. Ces lames métalliques se trouvent dans la partie tronconique et suivent la forme de celles-ci.

Dans la forme d'exécution représentée au dessin, la soupape est équipée d'un bouton 3 permettant d'actionner le clapet vers sa position d'ouverture. Ce bouton est muni d'un doigt central 31, dont l'extrémité libre 32 est en forme de harpon, cette tête étant logée dans la chambre 29 ménagée au centre du clapet, après introduction par l'évidement 27 et le couloir 28.

Dans ces conditions, il suffit d'exercer une traction sur le bouton 3 en direction opposée au siège 104 pour que la tête 32 du harpon entraîne le clapet 2 et éloigne du siège 104 la portée 21 du clapet, autorisant ainsi le passage de fluide de la chambre d'entrée 101 vers la chambre de sortie 100.

Il est également possible de réaliser l'actionnement manuel du clapet en prévoyant que le bouton 3 est monté pivotant sur le corps, et que le bouton de manoeuvre et le corps possèdent des surfaces en regard munies d'ondulations. Lorsque les ondulations prennent appui les unes sur les autres, il se produit un mouvement axial du bouton 3 relativement au corps 2 et par suite un mouvement axial du clapet par rapport au siège.

En pratique, lorsque la pression dans la chambre d'entrée 101 dépasse une valeur prédéterminée, elle provoque le soulèvement de la portée 21 du clapet, ce soulèvement résultant de la déformation du clapet au niveau de la lèvre annulaire 26 de celui-ci. Lorsque la pression revient à une valeur inférieure à une valeur prédéterminée, l'élasticité de la matière ramène le clapet vers sa position de fermeture.

Comme il ressort de ce qui précède, l'invention apporte une grande amélioration à la technique existante en fournissant une soupape de structure simple, réalisée à partir d'un nombre réduit de composants, dont le fonctionnement est très fiable, et qui peut également être actionnée manuellement.

Comme il va de soi, l'invention ne se limite pas à la seule forme d'exécution de cette soupape décrite ci-dessus à titre d'exemple, elle en embrasse au contraire toutes les variantes. C'est ainsi notamment que le corps pourrait être réalisé en une seule pièce, la cage de clapet faisant partie intégrante du porte-siège, sans que l'on sorte pour autant du cadre de l'invention.

## Revendications

1. Soupape de sécurité pour dispositif à fluide sous pression, du type comportant un corps (1) définissant une chambre d'entrée de fluide (101) et une chambre de sortie de fluide (100) séparées par une cloison (102) munie d'un passage (103) pour le fluide, entouré d'un siège annulaire (104), et un clapet (2) muni d'une portée (21) susceptible d'occuper deux positions, à savoir une première position de fermeture dans laquelle elle est appliquée contre le siège (104) et une seconde position d'ouverture dans laquelle elle est à distance du siège (104), le corps (1) étant constitué, d'une part, par un porte-siège (10) définissant les chambres d'entrée et de sortie (101, 100), ainsi que la cloison (102) munie du passage (103) entouré du siège (104), ce porte-siège comportant une ouverture (105) coaxiale au siège (104) et, d'autre part, par une cage (11) prolongeant le corps (1) au-delà de l'ouverture (105) coaxialement au siège (104), et le clapet (2) traversant l'ouverture (105) du corps, étant réalisé en un matériau déformable présentant, à l'une de ses extrémités la portée (20) d'appui contre le siège (104), à son autre extrémité une surface d'appui (22) contre la cage (11), caractérisée en ce que le clapet (2) comporte, dans sa partie centrale, une lèvre annulaire (26) faisant saillie vers l'extérieur, dont le pourtour est fixé au corps de la soupape.

2. Soupape selon la revendication 1, caractérisée en ce que l'ouverture (105) du porte-siège (10) est délimitée par un collet (106) s'étendant du côté opposé au siège (104) et servant au montage de la cage de clapet (11).

3. Soupape selon l'une quelconque des revendications 1 et 2, caractérisée en ce que le clapet (2) comporte, à son extrémité opposée à sa portée d'étanchéité (21), une portée tronconique (22), en appui contre une surface (110) de même inclinaison que présente la cage (10).

4. Soupape selon l'une quelconque des revendications 1 à 3, caractérisée en ce qu'un ressort métallique (4) est noyé dans le clapet (2).

5. Soupape selon l'une quelconque des revendications 1 à 4, caractérisée en ce que le clapet (2) comporte un évidement intérieur (27, 28, 29) débouchant dans sa face opposée à sa portée d'étanchéité.

6. Soupape selon la revendication 5, caractérisée en ce qu'elle comporte un bouton de manoeuvre (3) solidaire du clapet (2), possédant un doigt (31, 32) engagé dans l'évidement intérieur du clapet et dont la tête (32), en forme de harpon, est logée dans une chambre (29) ménagée au centre du clapet.

7. Soupape selon la revendication 6, caractérisée en ce que le corps (1) et le bouton de manoeuvre (3) comportant des surfaces en regard munies d'ondulations de formes conjuguées destinées à coopérer lors de la rotation du bouton (3) pour assurer un mouvement axial du bouton (3) relativement au corps (2).

## Patentansprüche

1. Sicherheitsventil für eine Vorrichtung mit Druckfluid, umfassend einen Körper (1), der eine Fluideintrittskammer (101) und eine Fluidaustrittskammer (100) definiert, die durch eine Trennwand (102) getrennt sind, welche mit einem Durchgang (103) für das Fluid versehen ist, der von einem ringförmigen Sitz (104) umgeben ist, und eine Klappe (2), die mit einer Dichtfläche (21) versehen ist, welche zwei Positionen einnehmen kann, nämlich eine erste Position des Verschlusses, in der sie gegen den Sitz (104) gedrückt ist, und eine zweite Position der Öffnung, in der sie sich in einem Abstand von dem Sitz (104) befindet, wobei der Körper (1) einerseits aus einem Sitzträger (10) besteht, der die Eintritts- und Austrittskammern (101, 100) sowie die Trennwand (102) definiert, die mit dem vom Sitz (104) umgebenen Durchgang (103) versehen ist, wobei dieser Sitzträger eine zum Sitz (104) koaxiale Öffnung (105) aufweist, und andererseits aus einem Gehäuse (11), das den Körper (1) über die Öffnung (105) hinaus koaxial zum Sitz (104) verlängert, und wobei die Klappe (2), welche die Öffnung (105) des Körpers durchläuft, aus einem verformbaren Material gefertigt ist und an einem ihrer Enden die Dichtfläche (21) zur Anlage an dem Sitz (104) und an ihrem anderen Ende eine Fläche zur Anlage (22) an dem Gehäuse (11) aufweist, dadurch gekennzeichnet, daß die Klappe (2) in ihrem mittleren Teil eine nach außen vorspringende ringförmige Lippe (26) aufweist, deren Umfang an dem Körper des Ventils befestigt ist.

2. Ventil nach Anspruch 1, dadurch gekennzeichnet, daß die Öffnung (105) des Sitzträgers (10) von einem Bund (106) begrenzt wird, der sich auf der dem Sitz (104) gegenüberliegenden Seite erstreckt und zur Montage des Klappengehäuses (11) dient.

3. Ventil nach einem der Ansprüche 1 und 2, dadurch gekennzeichnet, daß die Klappe (2) an ihrem Ende, das ihrer Dichtfläche (21) gegenüberliegt, einen kegelstumpfförmigen Bereich (22) aufweist, der an einer Fläche (110) von gleicher Neigung anliegt, welche das Gehäuse (10) aufweist.

4. Ventil nach einem der Ansprüche 1 bis 3, dadurch gekennzeichnet, daß eine Metallfeder (4) in der Klappe (2) eingebettet ist.

5. Ventil nach einem der Ansprüche 1 bis 4, dadurch gekennzeichnet, daß die Klappe (2) eine innere Aussparung (27, 28, 29) aufweist, die in ihrer Fläche mündet, welche ihrer Dichtfläche gegenüberliegt.

6. Ventil nach Anspruch 5, dadurch gekennzeichnet, daß es einen mit der Klappe (2) einstückigen Betätigungsknopf (3) aufweist, der einen Zapfen (31, 32) besitzt, welcher in die innere Aussparung der Klappe eingefügt ist und dessen ankerförmiger Kopf (32) in einer Kammer (29) angeordnet ist, die in der Mitte der Klappe vorgesehen ist.

7. Ventil nach Anspruch 6, dadurch gekennzeichnet, daß der Körper (1) und der Betätigungsknopf (3) gegenüberliegende Flächen aufweisen, die mit Welligkeiten von einander entsprechender Form versehen sind, die dazu bestimmt sind, bei der Drehung des Knopfes (3) zusammenzuwirken, um eine axiale Bewegung des Knopfes (3) in bezug auf den Körper (2) zu gewährleisten.

## Claims

1. Safety valve for a device with fluid under pressure, of the type comprising a body (1) defining a fluid inlet chamber (101) and a fluid outlet chamber (100), these chambers being separated by a partition (102) which has a passage (103) for the fluid, surrounded by an annular seat (104), and a shutter member (2) which has a bearing surface (21) capable of occupying two positions, namely a first, shutting-off position, in which it is pressed against the seat (104), and a second, open position, in which it is some distance from the seat (104), the body (1) consisting, on the one hand, of a seat carrier (10) defining the inlet and outlet chambers (101, 100), and the partition (102) which has the passage (103) surrounded by the seat (104), this seat carrier comprising an opening (105) coaxial with the seat (104) and, on the other hand, of a cage (11) extending the body (1) beyond the opening (105) along the same axis as the seat (104), and the shutter member (2) passing through the opening (105) of the body, being made of a deformable material which, at one of its ends, has the bearing surface (20) for bearing against the seat (104), and at its other end has a surface (22) for bearing against the cage (11), characterized in that the shutter member (2) comprises, in its central part, an outwardly projecting annular lip (26), the periphery of which is fixed to the body of the valve.

2. Valve according to Claim 1, characterized in that the opening (105) in the seat carrier (10) is delimited by a collar (106) extending on the opposite side to the seat (104) and used for mounting the shutter cage (11).

3. Valve according to either one of Claims 1 and 2, characterized in that the shutter member (2) comprises, at its opposite end to its sealing bearing surface (21), a frustoconical bearing surface (22) bearing against a surface (110) of the same inclination exhibited by the cage (10).

4. Valve according to any one of Claims 1 to 3, characterized in that a metallic spring (4) is embedded in the shutter member (2).

5. Valve according to any one of Claims 1 to 4, characterized in that the shutter member (2) comprises an interior recess (27, 28, 29) opening out into its opposite face to its sealing bearing surface.

6. Valve according to Claim 5, characterized in that it comprises an operating knob (3) secured to the shutter member (2) and having a finger (31, 32) engaged in the interior recess of the shutter member and the barbed head (32) of which is housed in a chamber (29) formed at the centre of the shutter member.

7. Valve according to Claim 6, characterized in that the body (1) and the operating knob (3) comprise surfaces facing each other which have undulations of mating shapes intended to interact when the knob (3) is turned so as to make the knob (3) move axially relative to the body (2).
